# FASCICULE DE BREVET EUROPEEN

(11) **EP 3 820 743 B1**
(45) Date de publication et mention de la délivrance du brevet: **29.10.2025**
(21) Numéro de dépôt: 19734384.1
(22) Date de dépôt: 27.06.2019
(51) Int. Cl.: B60R 19/52, B62D 25/00

(54) **GUIDE D'AIR POUR VEHICULE AUTOMOBILE REALISE D'UNE PIECE EN MATERIAU POLYMERE EXPANSE ET COMPORTANT DES ZONES D'ABSORPTION DE CHOC**
AUS EINEM STÜCK EXPANDIERTEM POLYMERMATERIAL MIT STOSSABSORBIERENDEN ZONEN HERGESTELLTE LUFTFÜHRUNG FÜR EIN KRAFTFAHRZEUG
AIR GUIDE FOR A MOTOR VEHICLE, MADE OF A PIECE OF EXPANDED POLYMER MATERIAL AND COMPRISING IMPACT ABSORBING ZONES

(30) Priorité: 10.07.2018 FR 1856301
(43) Date de publication de la demande: 19.05.2021
(73) Titulaire: Renault s.a.s, 92100 Boulogne Billancourt (FR)
(72) Inventeur: PEAN, Frederic, 78210 Saint Cyr L'école (FR); DUBOIS, Nicolas, 91340 Ollainville (FR); DIDIER, Sebastien, 78650 Beynes (FR)
(74) Mandataire: Renault Group
(86) Numéro de dépôt international: PCT/EP2019/067192
(87) Numéro de publication internationale: WO 2020/011550

(56) Documents cités:
- WO-A1-2017/036869
- FR-A1- 3 013 302
- FR-A1- 3 024 406
- US-A1- 2004 096 646
- US-A1- 2006 055 208

## Description

L'invention concerne un guide d'air monopièce destiné à être intégré à l'avant du véhicule, notamment fixé à une face avant technique du véhicule. Le guide d'air selon l'invention est réalisé d'une pièce en matériau polymère expansé, notamment en polypropylène expansé, et comporte des zones d'absorption de choc.

Un tel guide d'air a pour fonction de canaliser l'air pénétrant par au moins une ouverture ou grille d'aération dans la façade avant ou peau de bouclier avant du véhicule pour le conduire à un ensemble d'éléments regroupés dans ce qu'on appelle une « valise de refroidissement ». Par ce terme, on désigne l'ensemble des éléments nécessaires au refroidissement du moteur, parfois empilés en couches ou en partie superposés. La valise de refroidissement se compose classiquement du radiateur à eau de refroidissement moteur, éventuellement de l'échangeur air-air pour le refroidissement du turbo et du condenseur.

On appelle dans le métier « face avant technique » (FAT) une structure qui se trouve en avant du bloc moteur et qui a pour fonction de supporter différents organes, principalement le radiateur du bloc moteur. La FAT peut prendre de multiples formes. Dans certains cas, elle se réduit à une simple poutre transversale. Dans d'autres cas, elle constitue un châssis de forme plus ou moins complexe intégrant la valise de refroidissement. La FAT intègre en outre différentes fonctions telles que support de butées de capot, support de serrure de capot ou d'un jambage supportant la serrure de capot, etc.

Le respect des normes d'émissions de CO₂ de plus en plus sévères conduit les constructeurs automobiles à une recherche de l'allègement des véhicules d'autant plus intensive que le nombre d'équipements d'aide à la conduite embarqués sur les véhicules tend à augmenter (capteurs de proximité, caméra, radar actif de freinage, détection d'angle mort). La demanderesse a proposé dans le document FR 3013302 un guide d'air monopièce en matériau polymère. Un tel guide d'air présente l'avantage d'être léger et simple à réaliser. Un absorbeur de chocs situé en avant de la traverse est en outre prévu, cet absorbeur peut être un bloc indépendant ou être formé par une paroi pleine du guide d'air monopièce qui s'étend sur toute la largeur du véhicule. Dans tous les cas, l'absorbeur de choc est relativement volumineux et encombrant. En outre, cet élément n'exerce sa fonction d'absorption de choc que le long de la traverse.

Le document WO2017036869 divulgue un guide d'air déformable, réalisée en polypropylène expansé adapté pour se déformer lors d'un impact.

L'invention vise à pallier ces inconvénients en proposant un guide d'air monopièce en matériau polymère expansé qui présente des zones d'absorption de choc tout en restant peu encombrant et volumineux.

A cet effet, l'objet de l'invention concerne un guide d'air monopièce en matériau polymère expansé destiné à être intégré à l'avant d'un véhicule entre une face avant technique reliée à une traverse par des éléments compressibles longitudinalement et une façade avant dudit véhicule pourvue d'au moins une ouverture d'aération, le guide d'air présentant une face avant, une face arrière et une pluralité de parois longitudinales reliant la face avant à la face arrière et s'étendant parallèlement ou sensiblement parallèlement à la direction longitudinale du véhicule lorsque le guide d'air est monté à l'intérieur du véhicule, caractérisé en ce qu'au moins une partie des parois longitudinales présente une zone de restriction d'épaisseur inférieure à l'épaisseur de la paroi de part et d'autre de la zone de restriction.

Cette zone de restriction forme une zone de faiblesse qui va permettre soit une rupture de la paroi, soit le pliage de celle-ci lors d'un choc. Une telle rupture ou pliage permet d'absorber le choc subit et de réduire les effets de ce choc sur des éléments du véhicule situés en arrière du guide d'air sur le véhicule.

On notera que l'épaisseur de la zone de restriction peut correspondre à une épaisseur minimale de matière à respecter pour la réalisation et/ou la tenue de la pièce.

Le matériau polymère utilisé pour réaliser le guide d'air selon l'invention est choisi parmi les matériaux polymères expansés, par exemple du polypropylène expansé ou du polystyrène expansé, de préférence du polypropylène expansé. Par « matériau polymère expansé », on entend un matériau alvéolaire formé d'une phase polymère solide et d'une phase gazeuse dispersée. Ce type de matériau alvéolaire est aussi parfois appelé « mousse » (« foam » en anglais). Il s'agit notamment de matériaux rigides, à savoir qui ne se déforment pas sous l'effet de leur propre poids. De tels matériaux expansés présentent l'avantage d'être légers, ce qui permet de réaliser des guides d'air de faible poids, par exemple de poids de l'ordre de 1 kg ou moins.

Avantageusement, on peut utiliser un polypropylène expansé de masse volumique de 30 à 90 g/L, de préférence de 30 à 45 g/L.

En particulier, ce guide d'air peut être un guide d'air supérieur, à savoir disposé au dessus d'une traverse du véhicule automobile dans la position de montage du guide d'air.

Certaines parois longitudinales peuvent être reliées à une ou plusieurs parois dressées, perpendiculaires ou sensiblement perpendiculaires à la direction longitudinale du véhicule. La présence de ces parois dressées augmente la rigidité de la paroi longitudinale, au détriment de l'absorption de choc. Dans ce cas, avantageusement, les zones de restriction d'épaisseur peuvent être situées sur des parois longitudinales reliées à une ou plusieurs parois dressées permettant une absorption de choc au niveau des parois longitudinales les plus rigides.

De manière générale, pour une bonne efficacité, il est avantageux de disposer une zone de restriction perpendiculairement ou sensiblement perpendiculairement à la direction de l'effort/du choc que la zone doit absorber. Cette direction de l'effort/du choc est le plus souvent parallèle ou sensiblement parallèle à la direction longitudinale du véhicule, le guide d'air étant monté à l'intérieur du véhicule. Ainsi, avantageusement, la ou les zones de restriction s'étend perpendiculairement ou sensiblement perpendiculairement à la direction longitudinale lorsque le guide d'air est monté à l'intérieur du véhicule.

Avantageusement, chaque zone de restriction peut définir une gorge à section transversale en U évasé. Ceci peut faciliter la réalisation de la zone de restriction, notamment par moulage par injection. Notamment, les bords évasés de la section en U peuvent former entre eux un angle de 5 à 60°, un angle de 50° étant typiquement appliqué dans l'exemple de réalisation illustré.

L'invention concerne également un véhicule automobile comportant une face avant technique reliée à une traverse par des éléments compressibles longitudinalement et une façade avant pourvue d'au moins une ouverture d'aération, caractérisé en ce qu'il comporte au moins un guide d'air selon l'invention disposé entre la traverse et la face avant technique.

En particulier, le guide d'air peut être un guide d'air supérieur disposé en outre au dessus de la traverse.

L'invention est maintenant décrite en référence aux dessins annexés, non limitatifs, dans lesquels :
- la figure 1 est vue en perspective d'un guide d'air selon un mode de réalisation de l'invention, monté sur une FAT d'un véhicule automobile, entre la FAT et la traverse du véhicule ;
- la figure 2 est une vue de face de la partie avant d'un véhicule comprenant les éléments de la figure 1 et un bouclier ;
- les figures 3 et 4 sont des vues en perspective du guide d'air supérieur représenté figure 1 ;
- les figures 5 et 6 sont des vues en coupe partielle du guide d'air selon les lignes A-A et B-B de la figure 4.

Dans la présente description, les termes avant, arrière, supérieur, inférieur, font référence aux directions avant et arrière du véhicule, au haut et bas du véhicule, lorsque le guide d'air est monté sur le véhicule. Les axes X, Y, Z, correspondent respectivement à l'axe longitudinal (d'avant en arrière), transversal et vertical du véhicule, ce dernier reposant sur le sol. La direction verticale correspond ainsi à la direction de la gravité.

Par sensiblement horizontal, longitudinal ou vertical, on entend une direction/un plan formant un angle d'au plus ±20°, voire d'au plus 10° avec une direction/un plan horizontal, longitudinal ou vertical.

Par sensiblement parallèle, perpendiculaire ou à angle droit, on entend une direction/un angle s'écartant d'au plus ±20°, voire d'au plus 10° ou d'au plus 5° d'une direction parallèle, perpendiculaire ou d'un angle droit.

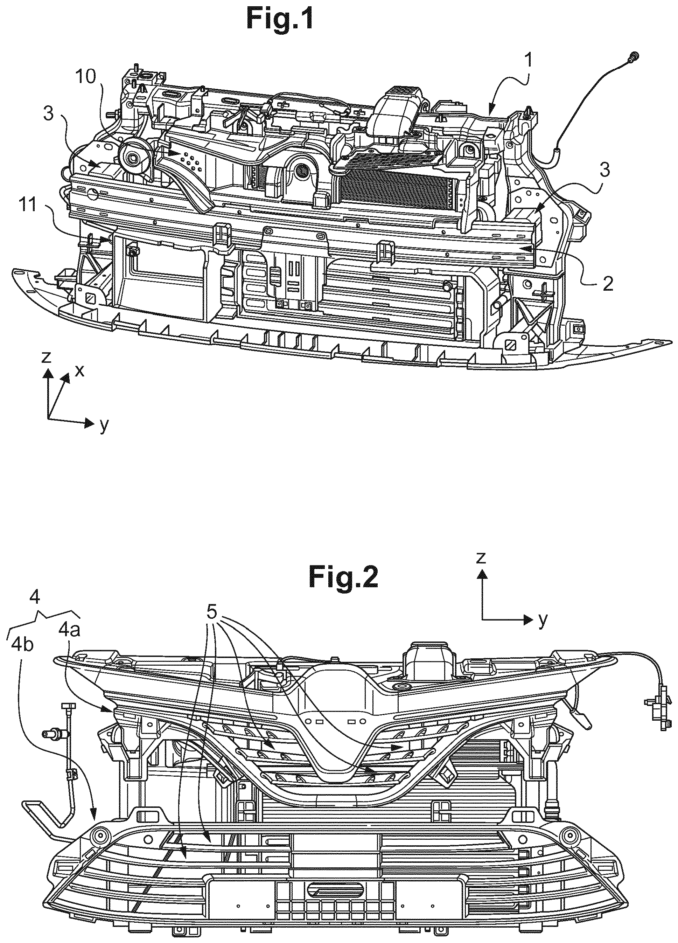

La figure 1 représente partiellement en perspective la partie avant d'un véhicule automobile sur laquelle sont visibles la FAT 1 du véhicule, la traverse extrême avant 2 et des éléments compressibles longitudinalement 3 (crash box) solidaires des extrémités de la traverse 2. Ces éléments compressibles 3 sont fixés sur la FAT 1, en général dans le prolongement des longerons (non représentés). Entre la FAT 1 et la traverse 2, fixés à la FAT 1, sont disposés un guide d'air supérieur 10 et un guide d'air inférieur 11. Le guide d'air supérieur 10 est disposé au dessus de la traverse 2, en appui sur cette dernière, alors que le guide d'air inférieur 11 est disposé en dessous de la traverse 2 et est fixée à celle-ci.

La traverse 2, aussi appelée traverse extrême avant, est une pièce de structure permettant notamment d'absorber les efforts lors d'un choc frontal et de répartir ces efforts selon la nature du choc. Cette traverse sert également de support pour fixer des éléments tels qu'avertisseur sonore, équerre pour la géométrie de la face avant.

La FAT 1 intègre ici une valise de refroidissement telle que définie plus haut.

La figure 2 représente les mêmes éléments cachés derrière la façade avant 4 laquelle comprend des ouvertures 5 pour le passage de l'air. La façade avant 4 est ici en deux parties, une partie supérieure 4a et une partie inférieure 4b. Une façade 4 monopièce est toutefois envisageable.

Chacun des guides d'air 10, 11 est réalisé d'une pièce en matériau polymère expansé, par exemple obtenu par moulage par injection. Le matériau polymère est un polypropylène expansé, de masse volumique de 30 à 90 g/L, de préférence de 30 à 45 g/L. A titre d'exemple, les produits ARPRO^{®} / P-block^{™} commercialisés par la société JSP sont utilisables, de même que les produits Neopolen^{®} de la société BASF.

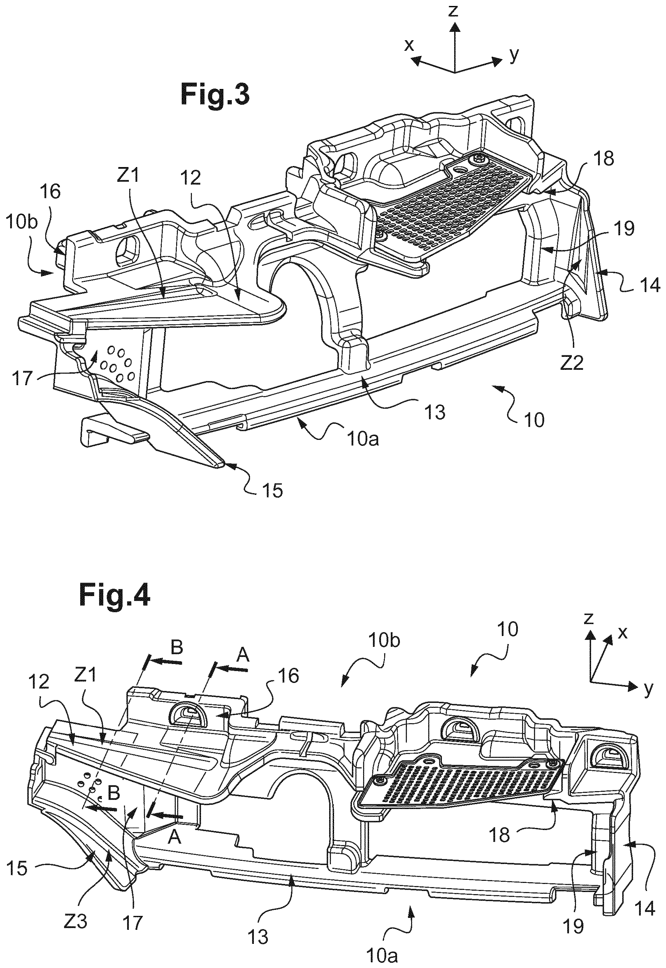

Le guide d'air 10 représenté sur la figure 1 et sur les figures 3 à 6 présente une face avant 10a, face visible depuis l'avant du véhicule, et une face arrière 10b, visible depuis l'arrière du véhicule. La face avant 10a vient en appui contre la façade avant 4 du véhicule, alors que la face arrière 10b vient en appui contre la FAT 1. En outre, le guide d'air 10 comprend une pluralité de parois longitudinales 12-15 reliant la face avant 10a à la face arrière 10b et s'étendant parallèlement ou sensiblement parallèlement à la direction longitudinale X du véhicule lorsque le guide d'air 10 est monté à l'intérieur du véhicule. Ainsi, ces parois longitudinales 12-15 sont en appui contre la façade avant 4 du véhicule laquelle va leur transmettre tous les efforts subit par l'avant du véhicule lors d'un choc.

Certaines de ces parois longitudinales 12-15 sont en outre reliées à des parois dites dressées 16-19, s'étendant perpendiculairement ou sensiblement perpendiculairement à la direction longitudinale X. Ainsi, la paroi longitudinale 12 est reliée à deux parois dressées 16 et 17, la paroi longitudinale 15 est reliée à une paroi dressée 17, la paroi longitudinale 14 est reliée à deux parois dressées 18, 19. Cet agencement participe à la rigidité du guide d'air mais peut s'avérer problématique pour l'absorption de chocs, notamment des chocs à faible vitesse (inférieure à 15 km/h).

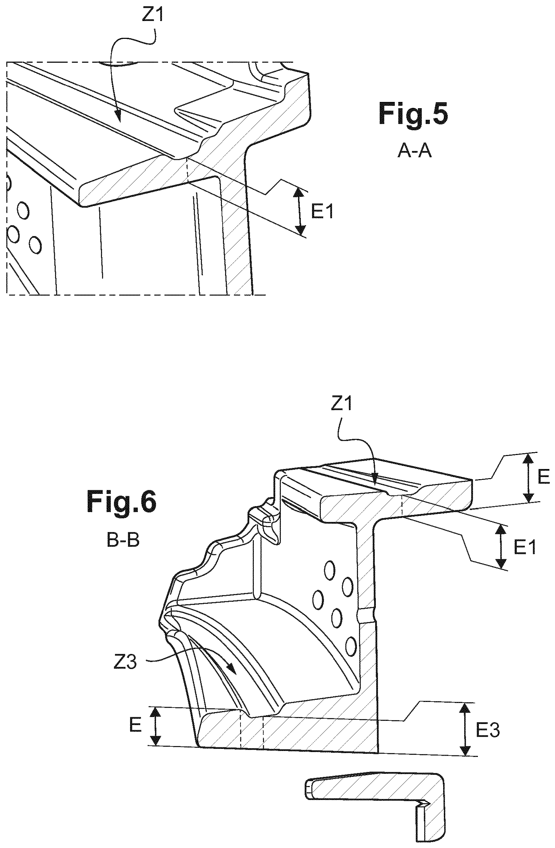

Selon l'invention, les parois longitudinales 12, 14, 15 sont pourvues d'une zone de restriction Z1, Z2, Z3 respectivement, dont l'épaisseur (référencée E1, E3 sur les figures pour les zones Z1 et Z3 respectivement) est inférieure à l'épaisseur de la paroi 12, 14, 15 de part et d'autre de la zone de restriction, tel que visible sur les figures 5 et 6. Dans l'exemple représenté, l'épaisseur E1 ou E3 de la zone de restriction Z1, Z3 respectivement, correspond à une épaisseur minimale de la paroi. Cette épaisseur minimale peut dépendre du mode de fabrication du guide d'air et/ou de la masse volumique du matériau polymère expansé. Selon l'invention, pour un polypropylène expansé de masse volumique de 30 g/L à 60 g/L, cette épaisseur minimale peut être de 10mm ± 1mm à 12 mm ± 1mm. Pour une masse volumique de 30 g/L, l'épaisseur minimale est typiquement de 12 mm. Pour une masse volumique de 45 g/L, l'épaisseur minimale est typiquement de 10 mm.

De manière générale, dans l'exemple représenté, les zones de restrictions Z1-Z3 se présentent sous la forme de gorges à section transversale en U évasé. Une telle forme présente l'avantage d'être facile à mettre en œuvre.

A titre d'exemple, avec une masse volumique de 30g/L, une épaisseur adaptée est comprise entre 12 et 16mm (bornes comprises) avec une zone de restriction d'épaisseur comprise entre 8 et 12mm (bornes comprises). Par exemple, pour une masse volumique à 30g/L, l'épaisseur nominale est typiquement de 15mm avec des restrictions à 12mm. Pour une masse volumique à 45g/L, l'épaisseur nominale est typiquement de 13mm avec des restrictions à 10mm. On peut prévoir localement des zones locales avec une restriction à environ 8mm, cela peut alors nécessiter un mouvement dans l'outillage.

La présence de ces zones de restriction selon l'invention permet de libérer de l'énergie lorsque l'avant du véhicule subit des chocs tels que :
- les chocs à faible vitesse (communément appelé « petit choc » ou choc parking <5km/h), limitant la casse au niveau de parties externes du véhicule (bouclier),
- les chocs de 10 à 15 km/h, limitant ainsi les pièces à changer et les coûts de réparation,
- les chocs dits piéton, limitant la gravité des blessures.

Les effets des chocs peuvent ainsi être réduits de manière très simple.

L'invention a été décrite en référence à un guide d'air supérieur. On comprend néanmoins qu'une zone de restriction telle que décrite peut être réalisée sur un guide d'air inférieur, voir sur un guide d'air formant à la fois un guide d'air inférieur et un guide d'air supérieur.

L'invention n'est pas limitée non plus par le nombre et la position des zones de restriction, qui dépendront du nombre et de la position de points rigides du guide d'air et/ou du nombre et de la position des éléments situés en arrière du guide d'air et que l'on souhaite protéger d'un choc.

L'invention permet de réaliser de manière très simple une zone de faiblesse capable d'absorber un choc, notamment un petit choc, pour autant nuire à la fonction du guide d'air, à savoir à l'étanchéité de ses parois, et sans complexifier notablement sa fabrication.

## Revendications

1. Guide d'air monopièce (10) en matériau polymère expansé destiné à être intégré à l'avant d'un véhicule entre une face avant technique (1) reliée à une traverse (2) par des éléments compressibles longitudinalement (3) et une façade avant (4) dudit véhicule pourvue d'au moins une ouverture d'aération (5), le guide d'air présentant une face avant (10a), une face arrière (10b) et une pluralité de parois longitudinales (12-15) reliant la face avant (10a) à la face arrière (10b) et s'étendant parallèlement ou sensiblement parallèlement à la direction longitudinale du véhicule lorsque le guide d'air est monté à l'intérieur du véhicule, au moins une partie des parois longitudinales (12, 14, 15) présentant une zone de restriction (Z1-Z3) d'épaisseur inférieure à l'épaisseur de la paroi (12, 14, 15) de part et d'autre de la zone de restriction, le matériau polymère étant un polypropylène expansé, **caractérisé en ce que** le polypropylène expansé a une masse volumique de 30 à 60 g/L, de préférence de 30 à 45 g/L, l'épaisseur réduite de la zone de restriction étant comprise entre 10mm ± 1mm et 12 mm ± 1mm, les parois longitudinales (12, 14, 15) pourvues d'une zone de restriction (Z1-Z3) étant en outre reliées à au moins une paroi dressée (16-19) perpendiculaire ou sensiblement perpendiculaire à la direction longitudinale du véhicule, la zone de restriction (Z1-Z3) s'étendant perpendiculairement ou sensiblement perpendiculairement à la direction longitudinale lorsque le guide d'air est monté à l'intérieur du véhicule.

2. Guide d'air selon la revendication 1, **caractérisé en ce que** la zone de restriction (Z1-Z3) définit une gorge à section transversale en U évasé.

3. Véhicule automobile comportant une face avant technique (1) reliée à une traverse (2) par des éléments compressibles longitudinalement (3) et une façade avant (4) pourvue d'au moins une ouverture d'aération (5), **caractérisé en ce qu'**il comporte au moins un guide d'air (10) selon l'une quelconque des revendications 1 ou 2 disposé entre la traverse (2) et la face avant technique (1).

4. Véhicule automobile selon la revendication 3, **caractérisé en ce que** le guide d'air (10) est un guide d'air supérieur disposé en outre au dessus de la traverse (2).

## Patentansprüche

1. Einteilige Luftführung (10) aus geschäumtem Polymermaterial, die dazu bestimmt ist, an der Front eines Fahrzeugs zwischen einer technischen Frontseite (1), die mit einem Querträger (2) über längs komprimierbare Elemente (3) verbunden ist, und einer Frontstruktur (4) des Fahrzeugs, die mit mindestens einer Lüftungsöffnung (5) ist, eingebaut zu werden, die Luftführung aufweisend eine Frontseite (10a), eine Rückseite (10b) und eine Mehrzahl von Längswänden (12-15), welche die Frontseite (10a) mit der Rückseite (10b) verbinden und sich parallel oder im Wesentlichen parallel zu der Längsrichtung des Fahrzeugs erstrecken, wenn die Luftführung im Inneren des Fahrzeugs montiert ist, wobei mindestens ein Teil der Längswände (12, 14, 15) einen Verjüngungsbereich (Z1-Z3) mit einer Dicke aufweist, die geringer als die Dicke der Wand (12, 14, 15) beidseits des Verjüngungsbereichs ist, wobei das Polymermaterial ein geschäumtes Polypropylen ist,
**dadurch gekennzeichnet, dass** das geschäumte Polypropylen eine Dichte von 30 bis 60 g/L, bevorzugt von 30 bis 45 g/L, besitzt, wobei die reduzierte Dicke des Verjüngungsbereichs zwischen 10 mm ± 1 mm und 12 mm ± 1 mm beträgt, wobei die Längswände (12, 14, 15), die mit einem Verjüngungsbereich (Z1-Z3) versehen sind, ferner mit mindestens einer aufrechten Wand (16-19) versehen sind, die senkrecht oder im Wesentlichen senkrecht zu der Längsrichtung verläuft, wobei sich der Verjüngungsbereich (Z1-Z3) senkrecht oder im Wesentlichen senkrecht zu der Längsrichtung erstreckt, wenn die Luftführung im Inneren des Fahrzeugs montiert ist.

2. Luftführung nach Anspruch 1, **dadurch gekennzeichnet, dass** der Verjüngungsbereich (Z1-Z3) eine Kehle mit dem Querschnitt eines gespreizten U definiert.

3. Kraftfahrzeug, umfassend eine technische Frontseite (1), die mit einem Querträger (2) über längs komprimierbare Elemente (3) verbunden ist, und eine Frontstruktur (4), die mit mindestens einer Lüftungsöffnung (5) versehen ist, **dadurch gekennzeichnet, dass** es mindestens eine Luftführung (10) nach einem der Ansprüche 1 oder 2 umfasst, die zwischen dem Querträger (2) und der technischen Frontseite (1) angeordnet ist.

4. Kraftfahrzeug nach Anspruch 3, **dadurch gekennzeichnet, dass** die Luftführung (10) eine obere Luftführung ist, die ferner an der Oberseite des Querträgers (2) angeordnet ist.

## Claims

1. One-piece air guide (10) made of expanded polymer material intended to be incorporated in the front of a vehicle between a technical front end (1) linked to a crossmember (2) by longitudinally compressible elements (3) and a front wall (4) of said vehicle provided with at least one ventilation opening (5), the air guide having a front face (10a), a rear face (10b) and a plurality of longitudinal walls (12-15) linking the front face (10a) to the rear face (10b) and extending parallel or substantially parallel to the longitudinal direction of the vehicle when the air guide is mounted inside the vehicle, at least a part of the longitudinal walls (12, 14, 15) having a restriction zone (Z1-Z3) of smaller thickness than the thickness of the wall (12, 14, 15) on either side of the restriction zone, the polymer material being an expanded polypropylene,
**characterized in that** the expanded polypropylene has a density of 30 to 60 g/L, preferably of 30 to 45 g/L, the reduced thickness of the restriction zone being between 10 mm ± 1 mm and 12 mm ± 1 mm, the longitudinal walls (12, 14, 15) provided with a restriction zone (Z1-Z3) also being linked to at least one erect wall (16-19) perpendicular or substantially perpendicular to the longitudinal direction of the vehicle, the restriction zone (Z1-Z3) extending perpendicularly or substantially perpendicularly to the longitudinal direction when the air guide is mounted inside the vehicle.

2. Air guide according to Claim 1, **characterized in that** the restriction zone (Z1-Z3) defines a groove with flared U-shaped cross section.

3. Motor vehicle comprising a technical front end (1) linked to a crossmember (2) by longitudinally compressible elements (3) and a front wall (4) provided with at least one ventilation opening (5), **characterized in that** it comprises at least one air guide (10) according to either one of Claims 1 and 2 disposed between the crossmember (2) and the technical front end (1).

4. Motor vehicle according to Claim 3, **characterized in that** the air guide (10) is a top air guide disposed also above the crossmember (2).
